# EUROPEAN PATENT SPECIFICATION

(11) **EP 0 742 402 B1**
(45) Date of publication and mention of the grant of the patent: **01.08.2001**
(21) Application number: 95107272.7
(22) Date of filing: 12.05.1995
(51) Int. Cl.: F16L 37/18

(54) **Tube connecting device**
Rohrverbindung
Raccord de tuyaux

(43) Date of publication of application: 13.11.1996
(73) Proprietor: Chen, Waterson, Ta-Li Hsiang, Taichung Hsien (TW)
(72) Inventor: Chen, Waterson, Ta-Li Hsiang, Taichung Hsien (TW)
(74) Representative: Grünecker, Kinkeldey, Stockmair & Schwanhäusser Anwaltssozietät

(56) References cited:
- US-A- 2 518 026
- US-A- 3 976 313
- US-A- 4 295 670
- US-A- 5 295 717

## Description

The present invention refers to a tube connecting device with the features cited in the preamble of claim 1.

In a tube connecting device of this type as described in US-A-5,295,717 the positioning rod is inserted in a blind bore in the locking position so that this connection provides the positioning in the locking mechanism of the device. This generally proved to be suitable. In practice, however, the press arm was sometimes damaged, in some cases with consequences for a proper function of the locking mechanism.

US-A-3,976,313 discloses a coupling made of a female member and a male member wherein the male member has an outer peripheral groove and the female member has levers swingable thereto and comprising a cam for engaging an annular groove of said male member. In the locking position, the levers are swung parallel to the axis of the male and the female member and the distal end of the lever is inserted between two ears laterally and radially projecting from said female member. Each of said ears carries a spring loaded ball projecting to the gap between two adjacent ears for engaging the outer chamfered edges of said lever.

US-A-4,295,670 describes a quick-disconnect cam locking safety coupling with which two tubular connector members can be locked together by turning an arm which is rotatably connected to one of said members, so that the cam surface of said arm engages into a recess in the other member. The head of the arm is rotatable by means of an axis extending between a pair of ears at the connector member. In the locking position, a lock protrudes through an opening in said arm. A wire locking pin 40 is received in an opening of said lock so that the wire locking pin is blocking a rotational movement of the arm.

It is the object of the present invention to provide a tube connecting device of the above-mentioned type with an improved opening, closing and locking function being less susceptible to damages.

This object is attained with a tube connecting device having the features of claim 1.

Other features and advantages of the present invention will become apparent in the following detailed description of the preferred embodiment, with reference to the accompanying drawings, of which:
Fig. 1 is an exploded view of the preferred embodiment of a tube connecting device according to the present invention;
Fig. 2 is an enlarged view illustrating a portion of the tube connecting device according to the present invention;
Fig. 3 is a sectional view of the preferred embodiment illustrating its assembly;
Fig. 4 is a fragmentary bottom view illustrating how a press arm of the preferred embodiment restricts the movement of a corresponding pull ring;
Fig. 5 is an enlarged fragmentary view which illustrates a positioning rod of the preferred embodiment when abutting a downwardly curving distal surface of a retaining seat;
Fig. 6 is an enlarged fragmentary view which illustrates the positioning rod when retracted gradually into a positioning bore that is formed in the press arm due to downward pivoting movement of the latter;
Fig. 7 is a sectional view of the preferred embodiment illustrating the positioning rods when engaging the retaining seats; and
Fig. 8 is an enlarged fragmentary view which illustrates one of the positioning rods when engaging the respective retaining seat.

### DETAILED DESCRIPTION OF THE PREFERRED EMBODIMENT

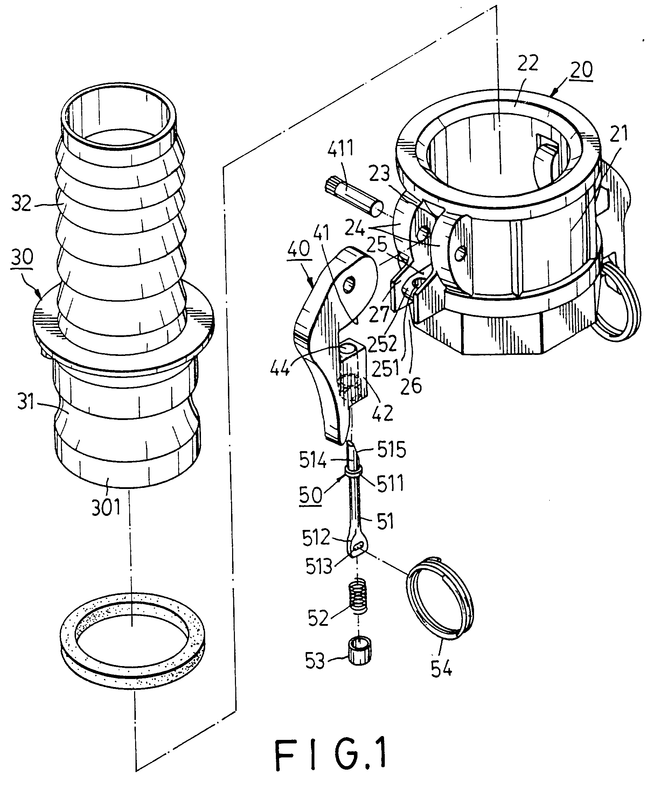

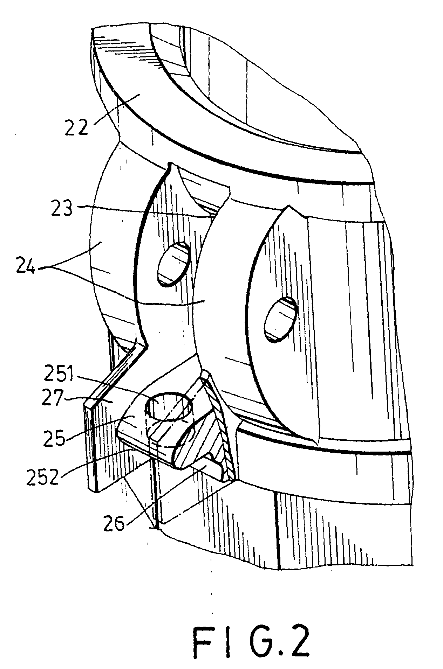

Referring to Figs. 1, 2 and 3, the preferred embodiment of a tube connecting device according to the present invention is shown to comprise a first tubular connector member 20, a second tubular connector member 30, a pair of press arms 40 and a pair of retaining units 50.

The first connector member 20 has a receiving end portion 21 which has an appropriately-sized inner diameter and which confines a hollow receiving space 22 therein. Two opposite pairs of pivot ears 24 project outwardly from the receiving end portion 20. A radial opening 23 is formed between each pair of pivot ears 24. A retaining seat 25 projects outwardly from the receiving end portion 21 below each of the pairs of pivot ears 24. Each of the retaining seats 25 is formed with a vertical through-hole 251 and has a downwardly curving distal surface 252. A pair of locating projections 26 project outwardly and radially from the first connector member 20 and are disposed immediately below a respective one of the retaining seats 25. Each of the locating projections 26 has a distal face disposed a first predetermined distance (L1) from an axis of the through-hole 251. Two pairs of guard plates 27 extend radially and outwardly from the first connector member 20 such that the guard plates 27 of each pair are located on two sides of the respective retaining seat 25 and on two sides of the locating projection 26 which is immediately below the respective retaining seat 25. The first connector member 20 further has an opposite end portion 28 which is adapted to be connected to one end of a corresponding tube . The structural connection between the opposite end portion 28 and the corresponding tube is known in the art and will not be detailed herein.

The second connector member 30 has an insert end portion 301 which extends into the hollow receiving space 22 confined by the receiving end portion 21 of the first connector member 20. The insert end portion 301 has an outer surface which is formed with an annular peripheral groove 31. The peripheral groove 31 has an inwardly curved inner end and is registered with the radial openings 23. The second connector member 30 further has an engaging end portion 32 which is adapted to be connected to one end of a corresponding tube (shown in phantom lines). The structural connection between the engaging end portion 32 and the corresponding tube is known in the art and will not be detailed herein.

Each of the press arms 40 is provided between one of the pairs of pivot ears 24 and has one end which is formed with a cam face 41 and which is mounted pivotally to the pivot ears 24 via a pivot pin 411. Each of the press arms 40 further has an inner side which is formed with a longitudinal positioning seat 42. The positioning seat 42 is formed with an axial positioning bore 44 which is aligned with the through-hole 251 in a respective one of the retaining seats 25 when the press arm 40 is pivoted downwardly to a locking position. The positioning seat 42 has an inner side face 421 disposed a second predetermined distance (L2) from an axis of the positioning bore 44. The second predetermined distance (L2) is equal to the first predetermined distance (L1) so that the inner side face 421 of the positioning seat 42 abuts the distal face of the locating projection 26 below the corresponding retaining seat 25 when the press arm 40 is in the locking position.

Each of the retaining units 50 includes a positioning rod 51 which is provided slidably in the positioning bore 44 of a respective positioning seat 42. The positioning rod 51 has an intermediate portion which is formed with a radial flange 511 and first and second end portions 514,512 which extend out of the positioning bore 44. A biasing unit, such as a compression spring 52, is disposed in the positioning bore 44 around the positioning rod 51. The compression spring 52 has one end which abuts against the radial flange 511. A locking ring 53 is provided around the positioning rod 51 and is press-fitted in a second end of the positioning bore 44, which second end is opposite to the first end thereof. The locking ring 53 abuts against the other end of the compression spring 52, thereby enabling the compression spring 52 to bias the positioning rod 51 to permit extension of the first end portion 514 of the positioning rod 51 normally out of the positioning bore 44. The first end portion 514 of each of the positioning rods 51 has a tip which is formed with an inclined surface 515 that abuts the distal surface 252 of the respective retaining seat 25 when the respective press arm 40 is being pivoted to the locking position. The second end portion 512 of each of the positioning rods 51 is formed with an elongated slot 513 which is transverse to an axis of the positioning rod 51. A pull ring 54, which is formed from a flexible wire material into a plurality of concentric turns, extends through the slot 513 in the second end portion 512 of a respective one of the positioning rods 51. Each of the pull rings 54 has one side adjacent to the inner side of the respective press arm 40.

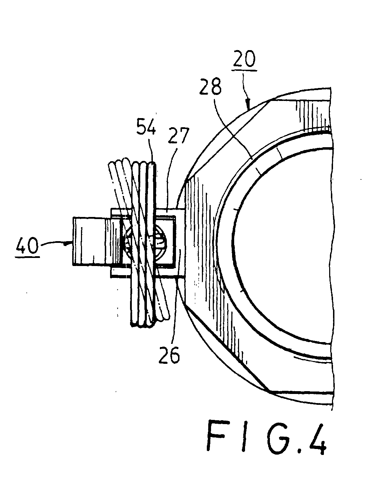

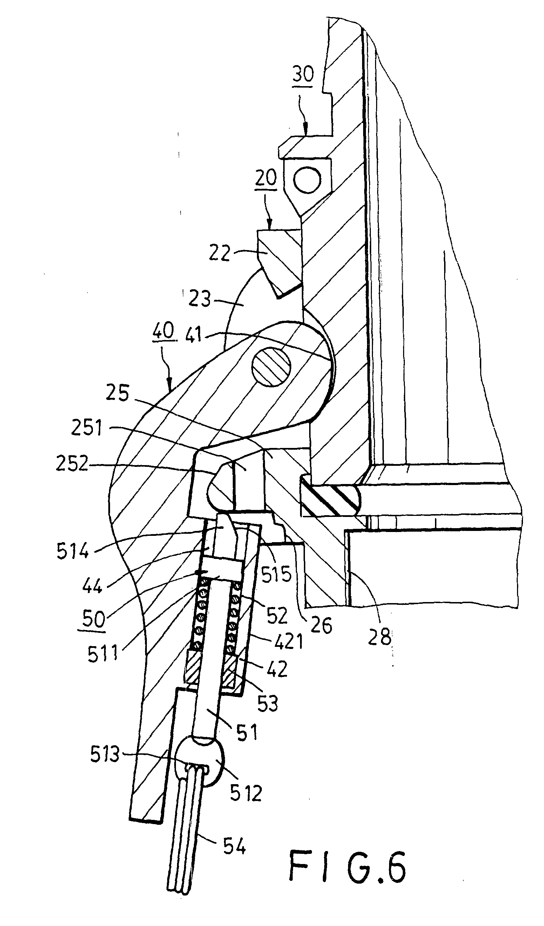

Referring to Figs. 4, 5 and 6, the positioning rods 51 are provided slidably in the positioning bore 44 of the respective positioning seat 25. The biasing unit 52 is disposed in the positioning bore 44 around the positioning rod 51. The locking ring 53 is provided around the positioning rod 51 and is press-fitted in the second end of the positioning bore 44 such that the positioning rod 51 is movable axially in the positioning bore 44. It should be noted that the second end portion 512 of each of the positioning rods 51 is flat. The pull rings 54 then extend respectively through the slots 513. Each of the pull rings 54 can be pulled in a direction along the axis of the positioning rod 51 so as to cause axial movement of the latter. Since the distance between the inner side of the press arm 40 and the respective pull ring 54 is relatively small, the rotation of the pull ring 54 about the axis of the positioning rod 51 is restricted so as to limit rotation of the positioning rod 51 in the positioning bore 44, thereby preventing the inclined surface 515 of the positioning rod 51 from being misplaced relative to the distal surface 252 of the respective retaining seat 25 when the respective press arm 40 is being pivoted to the locking position.

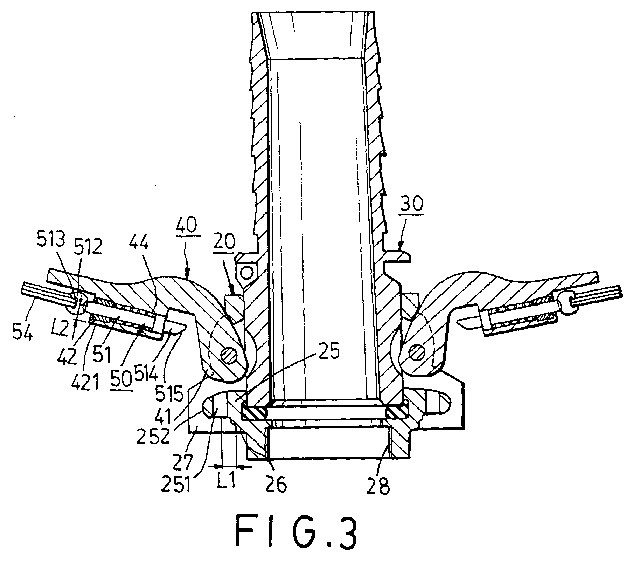

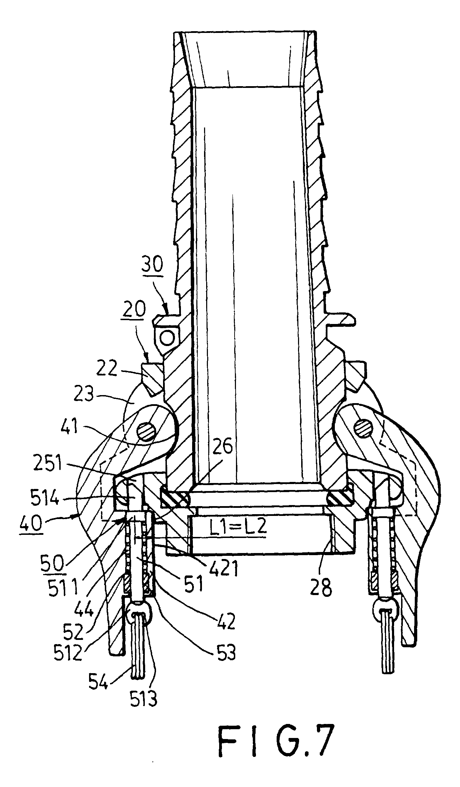

Referring to Figs. 3, 5 and 6, when the insert end portion 301 of the second connector member 30 is inserted within the hollow receiving space 22 in the receiving end portion 21 of the first connector member 2.0, the peripheral groove 31 is registered with the radial openings 23. The press arms 40 are then pivoted to the locking position toward the opposite end portion 28, thereby causing the cam faces 42 of the press arms 40 to extend into the peripheral groove 31 via the respective radial opening 23, as best illustrated in Fig. 7. The cam faces 42 press against the second connector member 30 at the peripheral groove 31, thereby securing the second connector member 30 to the first connector member 20.

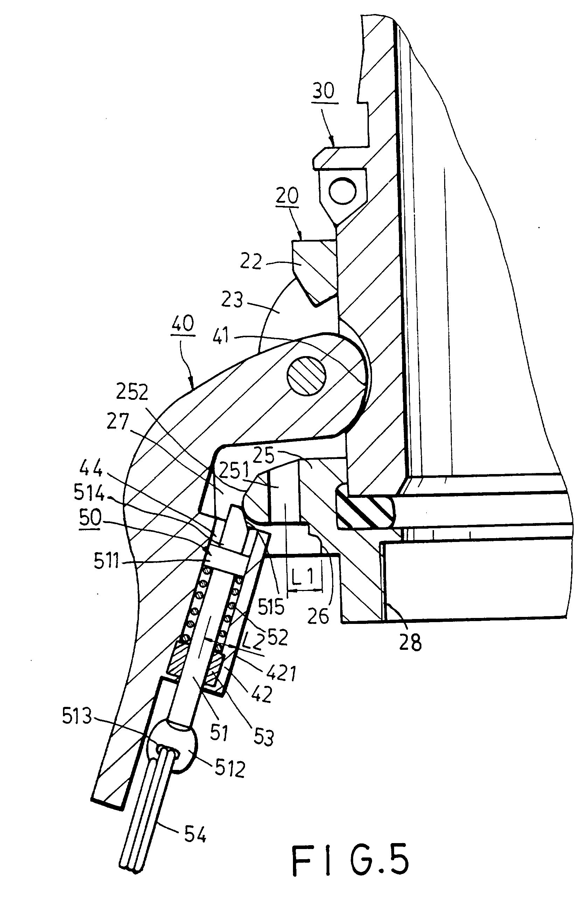

As the press arms 40 are pivoted to the locking position, the inclined surface 515 of the first end portion 514 of each positioning rod 51 eventually abuts against the distal surface 252 of the respective retaining seat 25. As the first end portion 514 moves downwardly along the distal surface 252 due to further pivoting movement of the corresponding press arm 40, the positioning rod 51 is retracted gradually into the positioning bore 44 against the action of the compression spring 52, as best illustrated in Fig. 5.

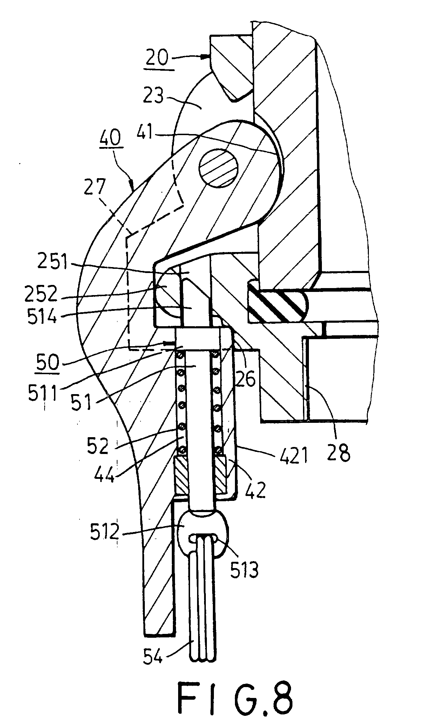

Referring to Figs. 7 and 8, when the positioning bore 44 is aligned with the through-hole 251 in the respective retaining seat 25, the distal surface 252 ceases to exert pressure on the first end portion 514 of the positioning rod 51. The first end portion 514 of the positioning rod 51 extends into the through-hole 251 at this stage, thus retaining the press arms 40 on the first connector member 20 so as to prevent untimely movement of the former. Tight engagement between the first and second connector members 20,30 is therefore ensured.

It should be noted that since the first predetermined distance (L1) is equal to the second predetermined distance (L2), the inner side face 421 of each of the positioning seats 42 abuts against the distal face of the respective locating projection 26 when the respective press arm 40 is in the locking position. Therefore, damage and deformation of the positioning rods 51 and the retaining seats 25 can be prevented when a moving object strikes the press arms 40 while the latter are in the locking position.

The guard plates 27, which are located on two sides of the retaining seats 25 and on two sides of the locating projections 26, and which cover two sides of the press arms 40 when the press arms 40 are in the locking position, provide additional protection against damage and deformation of the positioning rods 51 and the retaining seats 25 when the press arms 40 are subjected to impact. Moreover, the manner in which the inclined surfaces 515 of the positioning rods 51 are in contact with the distal surface 252 of the respective retaining seat 25 ensures smooth movement of the press arms 40 to the locking position.

Referring to Fig. 8, when it is desired to disengage the second connector member 30 from the first connector member 20, the pull rings 54 are pulled downwardly so as to retract the positioning rods 51 into the respective positioning bore 44 against the action of the compression springs 52, thereby disengaging the first end portion 514 from the respective retaining seat 25. The press arms 40 are then pivoted upwardly to an unlocking position until the cam faces 42 of the press arms 40 cease to extend into the peripheral groove 31 in the second connector member 30. The second connector member 30 can be removed from the first connector member 20 at this stage.

## Claims

1. A tube connecting device including
a first tubular connector member (20) having a receiving end portion (21) formed with a pair of opposite radial openings (23) and an opposite end portion (28) to be connected to a corresponding tube;
a second tubular connector member (30) having an insert end portion (301) which extends into said receiving end portion (21) and an engaging end portion (32) to be connected to a corresponding tube, said insert end portion (301) having an outer surface which is formed with an annular peripheral groove (31) that is registered with said radial openings (23);
a pair of press arms (40), each having one end mounted pivotally to said first connector member (20) adjacent to a respective one of said radial openings (23) and formed with a cam face (41), each of said press arms (40) being pivotable to a locking position in which said cam face (41) thereof extends into said peripheral groove (31) via the respective said radial opening (23) so as to press it against said second connector member (30) at said annular groove (31) in order to secure said second connector member (30) to said first connector member (20);
a pair of retaining seats (25), each of which projecting outwardly and radially from said first connector member (20) and being disposed below a respective one of said radial openings (23), each of said retaining seats (25) having a through hole (251) being parallel to the axis of the device;
each of said press arms (40) having an inner side which is formed with a longitudinal positioning seat (42), said positioning seat (42) being formed with an axial positioning bore (44) which is aligned with said through hole (251) in a corresponding one of said retaining seats (25) when said press arm (40) is in said locking positioning and having an inner side face (421) disposed a second predetermined distance (L2) from an axis of said positioning bore (44);
a pair of retaining units (50), each of said retaining units (50) including a positioning rod (51) which is provided slidably in said positioning bore (44) of a respective said positioning seat (42) and which has first and second end portions (514 and 512) that extend out of said positioning bore (44), a biasing unit (52) being disposed in said positioning bore (44) of said respective positioning seat (42) and biasing said positioning rod (51) so as to extend said first end portion (514) normally out of said positioning bore (44), and a pull ring (54) secured on said second end portion (512) of said positioning rod (51), said first end portion (514) extending into said through hole (251) of said respective retaining seat (25) when said respective press arm (40) is in said locking position;
**characterised in that**
a pair of locating projections (26), each of which projecting outwardly and radially from said first connector member (20) and being disposed immediately adjacent a respective one of said retaining seats (25), each of said locating projections (26) having a distal face disposed to a first predetermined distance (L1) from an axis of said through hole (251);
said second predetermined distance (L2) is equal to said first predetermined distance (L1) so that said inner side face (421) of said positioning seat (42) abut said distal face of said locating projection (26) adjacent said corresponding one of said retaining seats (25);
two pairs of guard plates (27) are provided, each pair of which extending radially and outwardly from said first connector member (20) and being located on two sides of a corresponding one of said retaining seats (25) and on two sides of said locating projection (26) adjacent to said corresponding one of said retaining seats (25), each pair of said guard plate (27) covering two sides of a corresponding said press arm (40) when said corresponding press arm (40) is in said locking position;
wherein each of said retaining seats (25) has a downwardly curving distal surface (252), and said first end position (514) of each of said positioning rods (51) has a tip which is formed with an inclined surface (515) that abuts said distal surface (252) of said respective retaining seat (25) when said respective press arm (40) is being pivoted to said locking position; and
said second end portion (512) of each of said positioning rods (51) is formed with an elongated slot (513) which is transverse to an axis of said positioning rod (51), each of said pull rings (54) extending through said slot (513) in said second end portion (512) of a corresponding one of said positioning rods (51) and having one side adjacent to said inner side of a corresponding one of said press arms (40).

## Patentansprüche

1. Rohrverbindungsvorrichtung, die enthält:
ein erstes röhrenförmiges Verbinderelement (20) mit einem Aufnahmeendabschnitt (21), der mit einem Paar einander gegenüberliegender radialer Öffnungen (23) versehen ist, und einem gegenüberliegenden Endabschnitt (23), der mit einem entsprechenden Rohr verbunden wird;
ein zweites röhrenförmiges Verbinderelement (30) mit einem Einführendabschnitt (301), der sich in den Aufnahmeendabschnitt (21) hinein erstreckt, einem Eingriffsendabschnitt (32), der mit einem entsprechenden Rohr verbunden wird, wobei der Einführendabschnitt (301) eine Außenfläche aufweist, die mit einer ringförmigen Umfangsnut (31) versehen ist, die auf die radialen Öffnungen (23) ausgerichtet wird;
ein Paar Druckarme (40), die jeweils ein Ende aufweisen, das an eine entsprechende der radialen Öffnungen (23) angrenzend schwenkbar an dem ersten Verbinderelement (20) angebracht und mit einer Nockenfläche (41) versehen ist, wobei jeder der Druckarme (40) in eine Arretierposition geschwenkt werden kann, in der sich die Nockenfläche (41) desselben über die entsprechende radiale Öffnung (23) in die Umfangsnut (31) hinein erstreckt und an der Ringnut (31) auf das zweite Verbinderelement (30) drückt, um das zweite Verbinderelement (30) an dem ersten Verbinderelement (20) zu befestigen;
ein Paar Halteaufnahmen (25), die jeweils von dem ersten Verbinderelement (20) nach außen und radial vorstehen und unter einer entsprechenden der radialen Öffnungen (23) angeordnet sind, wobei jede der Halteaufnahmen (25) ein Durchgangsloch (251) aufweist, das parallel zur Achse der Vorrichtung ist;
wobei jeder der Druckarme (40) eine Innenseite hat, die mit einer Längs-Positionieraufnahme (42) versehen ist und die Positionieraufnahme (42) mit einer Axial-Positionierbohrung (44) versehen ist, die auf das Durchgangsloch (251) in einer entsprechenden der Halteaufnahmen (25) ausgerichtet ist, wenn sich der Druckarm (40) in der Arretierposition befindet und eine Innenseitenfläche (421) hat, die in einem zweiten vorgegebenen Abstand (L2) zu einer Achse der Positionierbohrung (44) angeordnet ist;
ein Paar Halteeinheiten (50), wobei jede der Halteeinheiten (50) eine Positionierstange (51) enthält, die verschiebbar in der Positionierbohrung (44) einer entsprechenden der Halteaufnahmen (42) vorhanden ist, und die einen ersten und einen zweiten Endabschnitt (514) und (512) aufweist, die sich aus der Positionierbohrung (44) heraus erstrecken, eine Spanneinheit (52), die in der Positionierbohrung (44) der entsprechenden Positionieraufnahme (42) angeordnet ist und die Positionierstange (51) so spannt, dass sich der erste Endabschnitt (514) normalerweise aus der Positionierbohrung (44) heraus erstreckt, und einen Zugring (54), der an dem zweiten Endabschnitt (512) der Positionierstange (51) befestigt ist, wobei sich der erste Endabschnitt (514) in das Durchgangsloch (251) der entsprechenden Halteaufnahme (25) hinein erstreckt, wenn sich der Druckarm (40) in der Arretierposition befindet;
**dadurch gekennzeichnet**, dass:
ein paar Fixiervorsprünge (26) vorhanden sind, die sich jeweils von dem ersten Verbinderelement (20) aus nach außen und radial erstrecken und unmittelbar an eine entsprechende der Halteaufnahmen (25) angrenzend angeordnet sind, wobei jeder der Fixiervorsprünge (26) eine vordere Fläche aufweist, die in einem ersten vorgegebenen Abstand (L1) zu einer Achse des Durchgangslochs (251) angeordnet ist;
wobei der zweite vorgegebene Abstand (L2) dem ersten vorgegebenen Abstand (L1) entspricht, so dass die Innenseitenfläche (421) der Positionieraufnahme (42) an der vorderen Fläche des Fixiervorsprungs (26) an eine entsprechende der Halteaufnahmen (25) angrenzend anliegt;
zwei Paare von Schutzplatten (27) vorhanden sind, wobei sich jedes Paar derselben von dem ersten Verbinderelement (23) aus radial und nach außen erstreckt und auf zwei Seiten einer entsprechenden der Halteaufnahmen (25) und auf zwei Seiten des Fixiervorsprungs (26) an die entsprechende der Halteaufnahmen (25) angrenzend angeordnet ist, wobei jedes Paar der Schutzplatten (27) zwei Seiten eines entsprechenden Druckarms (40) abdeckt, wenn sich der entsprechende Druckarm (40) in der Arretierposition befindet;
wobei jede der Halteaufnahmen (25) eine sich nach unten krümmende vordere Fläche (252) aufweist, und der erste Endabschnitt (514) jeder der Positionierstangen (51) ein vorderes Ende aufweist, das mit einer schrägen Fläche (515) versehen ist, die an der vorderen Fläche (252) der entsprechenden Halteaufnahme (25) anliegt, wenn der Druckarm (40) in der Arretierposition geschwenkt wird; und
der zweite Endabschnitt (512) jeder der Positionierstangen (51) mit einem Längsschlitz (513) versehen ist, der quer zu einer Achse der Positionierstange (251) ist, sich jeder der Zugringe (54) durch den Schlitz (513) in dem zweiten Endabschnitt (512) einer entsprechenden der Positionierstangen (51) hindurch erstreckt und eine Seite aufweist, die an die Innenseite eines entsprechenden der Druckarme (40) angrenzt.

## Revendications

1. Raccord de tuyaux comprenant :
un premier élément (20) de raccord tubulaire comportant une partie d'extrémité réceptrice (21) formée avec une paire d'ouvertures radiales opposées (23) et d'une partie d'extrémité opposée (28) à raccorder à un tuyau correspondant;
un deuxième élément (30) de raccord tubulaire comportant une partie (301) d'extrémité d'insert qui s'étend dans ladite partie (21) d'extrémité réceptrice et une partie (32) d'extrémité venant en prise à raccorder à un tuyau correspondant, ladite partie (301) d'extrémité d'insert ayant une surface extérieure formée d'une rainure périphérique annulaire (31) qui coïncide avec lesdites ouvertures radiales (23);
une paire de bras de pression (40), ayant chacun une extrémité montée pivotante sur ledit premier élément (20) de raccord adjacent à l'une respective des dites ouvertures radiales (23) et formée d'une face (41) de came, chacun des bras de pression (40) pouvant pivoter jusqu'à une position de verrouillage dans laquelle ladite face (41) de came de celui-ci s'étend dans ladite rainure périphérique (31) via ladite ouverture radiale respective (23) de manière à la presser contre ledit deuxième élément (30) de raccord dans ladite rainure radiale (31) afin de fixer ledit deuxième élément (30) de raccord audit premier élément (20) de raccord;
une paire de sièges de retenue (25), chacun d'eux faisant saillie vers l'extérieur et radialement à partir dudit premier élément (20) de raccord et étant disposé au-dessous d'une respective desdites ouvertures radiales (23), chacun desdits sièges de retenue (25) ayant un trou de passage (251) parallèle à l'axe du dispositif;
chacun des bras de pression (40) ayant une face intérieure formée d'un siège de positionnement longitudinal (42), ledit siège de positionnement (42) étant formé d'un alésage de positionnement axial (44) aligné avec ledit trou de passage (251) dans l'un correspondant desdits sièges de retenue (25) lorsque ledit bras de pression (40) est dans ladite position de verrouillage et ayant une face latérale intérieure (421) disposée à une deuxième distance prédéterminée (L2) d'un axe dudit alésage de positionnement (44);
une paire d'unités de retenue (50), chacune desdites unités de retenue (50) comprenant une tige de positionnement (51) placée en pouvant coulisser dans ledit alésage de positionnement (44) d'un dit siège de positionnement respectif (42) et qui a des première et deuxième parties d'extrémité (514 et 512) qui s'étendent hors dudit trou de positionnement (44), une unité de chargement (52) étant disposée dans ledit alésage de positionnement (44) dudit siège de positionnement respectif (42) et appliquant une charge à ladite tige de positionnement (51) de manière à étendre ladite première partie d'extrémité (514) normalement hors dudit alésage de positionnement (44), et un anneau de tirage (54) fixé sur ladite deuxième partie d'extrémité (512) de ladite tige de positionnement (51), ladite première partie d'extrémité (514) s'étendant dans ledit premier trou de passage (251) dudit siège de retenue respectif (25) lorsque ledit bras de pression respectif (40) est dans ladite position de verrouillage;
caractérisé en ce que
une paire de saillies de localisation (26), chacune d'entre elles faisant saillie vers l'extérieur et radialement à partir dudit premier élément de raccord (20) et étant disposée immédiatement adjacente à l'un respectif desdits sièges de retenue (25), chacune desdites saillies de localisation (26) ayant une face distale disposée à une première distance prédéterminée (L1) d'un axe dudit trou de passage (251);
ladite deuxième distance prédéterminée (L2) est égale à ladite première distance prédéterminée (L1), de sorte que ladite face latérale intérieure (421) dudit siège de positionnement (42) vient en butée contre ladite face distale de ladite saillie de localisation (26) adjacente au siège correspondant desdits sièges de retenue (25);
deux paires de plaques de garde (27) sont prévues, chacune de ces paires faisant saillie radialement et vers l'extérieur à partir dudit premier élément (20) de raccord et étant située sur deux côtés audit siège correspondant desdits sièges de retenue (25) et sur deux côtés de ladite saillie de localisation (26) adjacente audit siège correspondant desdits sièges de retenue (25), chaque paire desdites plaques de garde (27) recouvrant deux côtés d'un dit bras de pression (40) correspondant lorsque ledit bras de pression correspondant (40) est dans ladite position de verrouillage;
dans lequel chacun desdits sièges de retenue (25) a une surface distale (252) incurvée vers le bas et ladite première position d'extrémité (514) de chacune desdites tiges de positionnement (51) a un bout formé d'une surface inclinée (515) qui vient buter contre ladite surface distale (252) dudit siège de retenue (25) respectif lorsque ledit bras de pression (40) respectif est tourné jusqu'à la position de verrouillage; et
ladite deuxième partie d'extrémité (512) de chacune desdites tiges de positionnement (51) est formée d'une fente allongée (513) transversale à un axe de ladite tige de positionnement (51), chacun desdits anneaux de tirage (54) passant par ladite fente (513) dans ladite deuxième partie d'extrémité (512) d'une tige correspondante desdites tiges de positionnement (51) et ayant un côté adjacent audit côté intérieur d'un bras correspondant desdits bras de pression (40).
